# EUROPÄISCHE PATENTSCHRIFT

(11) **EP 0 875 031 B1**
(45) Veröffentlichungstag und Bekanntmachung des Hinweises auf die Patenterteilung: **20.06.2001**
(21) Anmeldenummer: 96946193.8
(22) Anmeldetag: 13.12.1996
(51) Int. Cl.: G06F 15/16

(54) **PROZESSOR ZUR BILDVERARBEITUNG**
IMAGE-PROCESSING PROCESSOR
PROCESSEUR DE TRAITEMENT D'IMAGES

(30) Priorität: 15.01.1996 DE 19601201
(43) Veröffentlichungstag der Anmeldung: 04.11.1998
(73) Patentinhaber: Infineon Technologies AG, 81669 München (DE)
(72) Erfinder: HACHMANN, Ulrich, D-81677 München (DE); RAAB, Wolfgang, D-81739 München (DE); SCHACKOW, Alexander, D-81739 München (DE); RAMACHER, Ulrich, D-80331 München (DE); SCHÜFFNY, Rene, D-01640 Coswig (DE); BRÜLS, Nikolaus, D-81549 München (DE); GLIESE, Jörg, D-80339 München (DE)
(74) Vertreter: Zedlitz, Peter, Dipl.-Inf.
(86) Internationale Anmeldenummer: DE9602404
(87) Internationale Veröffentlichungsnummer: WO9726603

(56) Entgegenhaltungen:
- EP-A- 0 280 969
- EP-A- 0 461 724

## Beschreibung

Derartige Prozessoren werden für eine schnelle Verarbeitung von rechenintensiven Algorithmen wie zum Beispiel 2-dimensionale Faltung, Gabor-Transformation, Gauß- oder Laplace-Pyramide, Block Matching, DCT, MPEG2, usw. benötigt.

Aus der Zeitschrift Design und Electronic 12 vom 13.06.1995, Seiten 30 bis 35, ist zu diesem Zweck beispielsweise eine Anordnung, bei der die rechenzeitkritischen Signalverarbeitungsalgorithmen von zugeschnittenen programmierbaren Spezialprozessoren abgearbeitet werden, bei dem die Register über einen on-chip-Speicher versorgt werden und bei dem ein aufwendiger Crossbar-Switch für eine optimale Kommunikation zwischen dem on-chip-Speicher und den Prozessoren sorgt. Nachteilig ist hierbei der relativ hohe on-chip-Speicherbedarf und die für viele Algorithmen zu geringe Rechenleistung aufgrund der geringen Anzahl von parallelen Rechenwerken. Bei Verwendung von noch mehr als vier parallelen Signalprozessoren erhöht sich hierbei der Kommunikationsaufwand und damit die Chipfläche überproportional.

Ferner ist aus der Veröffentlichung Microprocessor Report, The Insider's Guide to Microprocessor-Hardware, Volume 8, Nr. 13, Oktober 3, 1994, Seiten 5 bis 9, ein hochgepipelineter, superskalarer 64 bit RISC-Prozessor mit zwei Integer- und drei Floating-Point-Einheiten, bekannt, der um zwei Graphikeinheiten, nämlich eine Addition/Subtraktionseinheit und eine Multiplikationseinheit für parallele Integer-Berechnungen, erweitert ist. Aufgrund der begrenzten Zahl von Registerports können nur zwei Floating-Point bzw. Graphikbefehle gleichzeitig abgearbeitet werden. Dies bedeutet, daß die Rechenleistung für viele Anforderungen aus der Bildverarbeitung nicht ausreichend ist.

Ferner ist ebenfalls aus Microprocessor Report, Dezember 6, 1994, Seiten 12 bis 15, ein Prozessor bekannt, bei dem zum Teil unterschiedliche Execution Units vorgesehen sind, von denen mit jedem Befehl bis zu fünf gleichzeitig angesprochen werden können. Nachteilig ist dabei ein relativ aufwendiger Compiler, der alle Latenzzeiten des Prozessors berücksichtigt und dafür sorgt, daß die parallelen Befehle die Hardware optimal und konfliktfrei nutzen.

Aus den Proceedings zur Conference on Visual Communication and Image Processing (VCIP'94) Chicago, 1994, pp. 1753 bis 1765 bzw. aus Proceedings of the IEEE 1993, Custom Integrated Circuit Conference, San Diego, California, May 9 bis 12, 1993, Seite 4.6.1 bis 4.6.3 sind hochparallele eindimensionale SIMD-Prozessorfelder mit lokalem Speicher und hohen Datenraten zwischen lokalem Speicher und Prozessorelement bekannt, bei denen komplizierte Operationen aus Einzeloperationen zusammengebaut und die längere Ausführungszeit dieser zusammengesetzten Operationen durch eine hohe Anzahl von Prozessorelementen wieder ausgeglichen werden. Im ersten Fall liegt ein globaler Matrixspeicher vor, der das Verteilen von zweidimensionalen Bildausschnitten an die einzelnen Prozessorelemente erlaubt. Im zweiten Fall erlaubt eine globale Kommunikationsmöglichkeit die Mehrfachnutzung einmal geladener Daten und reduziert die erforderliche Verdrahtungsbandbreite zwischen Prozessorfeld und externen Speichern. Nachteilig ist hierbei die schwierige Programmierung, eine aufwendige Steuerung bei gepipelineten Prozessorelementen, die niedrige Frequenz bei nicht gepipelineten Prozessorelementen und ein großer on-chip-Speicher.

Der Erfindung liegt nun die Aufgabe zugrunde, einen Prozessor zur Bildverarbeitung anzugeben, der bei geringem Chipflächenbedarf eine möglichst hohe Verarbeitungsgeschwindigkeit für die in der Bildverarbeitung häufig benötigten Verfahren bietet.

Diese Aufgabe wird erfindungsgemäß durch die Merkmale des Patentanspruchs 1 gelöst. Vorteilhafte Ausgestaltungen der Erfindung ergeben sich aus den Unteransprüchen.

Besondere Vorteile der Erfindung liegen vor allem in der leichten Skalierbarkeit und Rekonfigurierbarkeit des Systems für unterschiedliche Datenformate, in der Eignung zum Aufbau von low-cost-Systemen, wie beispielsweise eines Bildverarbeitungssystems oder eines Neurocomputers, bei dem neben dem erfindungsgemäßen Prozessor im wesentlichen nur noch Standardspeicherbausteine benötigt werden. Ein wesentlicher Vorteil liegt in der Möglichkeit einer Echtzeitverarbeitung von den oben genannten rechenintensiven Bildverarbeitungsalgorithmen.

Die Erfindung wird im folgenden anhand der Zeichnung näher erläutert. Dabei zeigt
- Figur 1: ein Blockschaltbild eines Prozessorelementes eines erfindungsgemäßen Prozessors zur Bildverarbeitung,
- Figur 2a: einen ersten Teil einer detaillierten Schaltung eines Prozessorelementes nach Figur 1,
- Figur 2b: einen zweiten Teil einer detailliserten Schaltung eines Prozessorelementes nach Figur 1,
- Figur 3: eine erste Ausgestaltung eines erfindungsgemäßen Prozessors und
- Figur 4: eine zweite Ausgestaltung eines erfindungsgemäßen Prozessors.

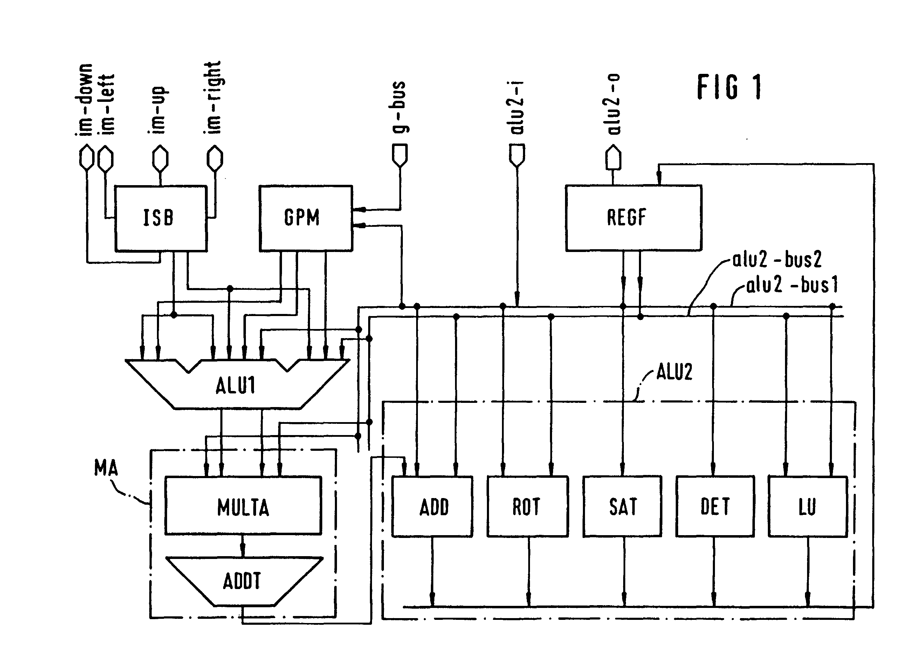

In Figur 1 ist das Blockschaltbild eines Prozessorelementes eines erfindungsgemäßen Prozessors zur Bildverarbeitung gezeigt, bei dem eine arithmetisch-logische Einheit (ALU) ALU2 und eine Registerbank REGS und darüber hinaus ein Teil eines verteilten Bildausschnittspeichers ISB (image section buffer), einen Vielzeckspeicher GPM (general purpose memory), eine weitere arithmetisch-logische Einheit ALU1 und eine Multiplizier/Addier-Einheit MA aufweist. Die arithmetische Einheit ALU2 weist typischerweise einen Additionsteil ADD, einen Barrel-Rotator ROT zur Verschiebung des Wertebereichs, eine Sättigungseinrichtung SAT zur Bitbreitenanpassung, einen Detektor DET zur Festlegung des msbs bzw. lsbs (most bzw. least significant bit) und eine logische Einheit LU auf. Die Multiplizier/Addier-Einheit MA besteht typischerweise aus einem Multipliziererfeld MULTA mit einer Reihe von Einzelmultiplizierern, deren Einzelergebnisse durch einen nachgeschalteten Addiererbaum ADDT zu einem Gesamtergebnis zusammengefaßt werden. Der Speicher ISB kann als zweidimensionales bidirektionales Schieberegister aufgefaßt werden, das beispielsweise Informationen für 2 x 2 Bildpunkte aufnehmen kann. In den Speicher ISB können in vertikaler Richtung Bilddaten über Eingangs/Ausgangs-Ports im-down und im-up sowie im horizontaler Richtung über Eingangs/Ausgangs-Ports im-left und im-right eingelesen und ausgeschrieben werden. Beim Speicher GPM handelt es sich um einen Standardspeicher, der on-chip vorgesehen ist, der als zweite lokale Datenquelle im Prozessorelement dient und der über einen globalen Bus g-bus versorgt wird. Der Speicher GPM enthält Koeffizienten, Schaltungskerne, Bitmasken, Gewichtsmatrizen bei neuronalen Netzen usw. Sowohl beim Speicher ISB als auch beim Speicher GPM erfolgt ein Lesezugriff nicht nach Einzeldaten, sondern je nach Datenformat auf mehrkomponentige Vektoren. Die Gesamtheit der Bildausschnittspeicher aller Prozessorelemente repräsentieren einen verteilten zweidimensionalen Bildausschnittspeicher. über die lokalen Verbindungen zwischen den Prozessorelementen läßt sich der Bildausschnitt pixelweise nach oben/unten oder links/rechts verschieben. Für einen Bildausschnitt der Kantenlänge n müssen dazu an jeweils einer Kante des Zellenfeldes des Speichers ISB n Pixel nachgeschoben werden. Die Prozessorelemente können nur lesend auf ihren Bildausschnitt zugreifen. Mit einem Zugriff kann nicht nur ein einzelnes Pixel gelesen werden, sondern je nach Pixelformat, das heißt je nach Genauigkeit, ein Vektor oder ein Feld von Bildpunkten.

Die Daten aus den lokalen Speicher ISB und GPM werden der weiteren arithemtisch logischen Einheit ALU1 zugeführt, welche ausgangsseitig mit Eingängen der Multiplizier/Addier-Einheit MA verbunden ist. Der Ausgang der Multiplizier/Addier-Einheit ist eingangsseitig mit der arithmetisch-logischen Einheit ALU2 verbunden, deren Ausgang mit der Registerbank REGF verbunden ist. Ausgänge der Registerbank REGF sind gleichzeitig Ausgänge alu2-o des Prozessorelementes. Die Ausgänge der Registerbank REGF sowie Eingänge alu2-i des Prozessorelementes sind mit Eingängen der arithemtisch-logischen Einheit ALU2 verbunden.

Darüber hinaus sind in einer weiteren Ausgestaltung die Eingänge alu2-i und/oder die Ausgänge der Registerbank REGF mit Eingängen der weiteren arithmetisch-logischen Einheit ALU1 verbindbar.

In einer dritten Ausgestaltung sind die Eingänge alu2-i und/oder die Ausgänge der Registerbank REGF mit Eingängen der Multiplizier/Addier-Einheit MA verbindbar.

In einer vierten Ausgestaltung sind die Eingängen alu2-i und/oder die Ausgänge der Registerbank REGF sowohl mit Eingängen der weiteren arithmetisch-logischen Einheit ALU1 als auch mit Eingängen der Multiplizier/Addier-Einheit MA verbindbar.

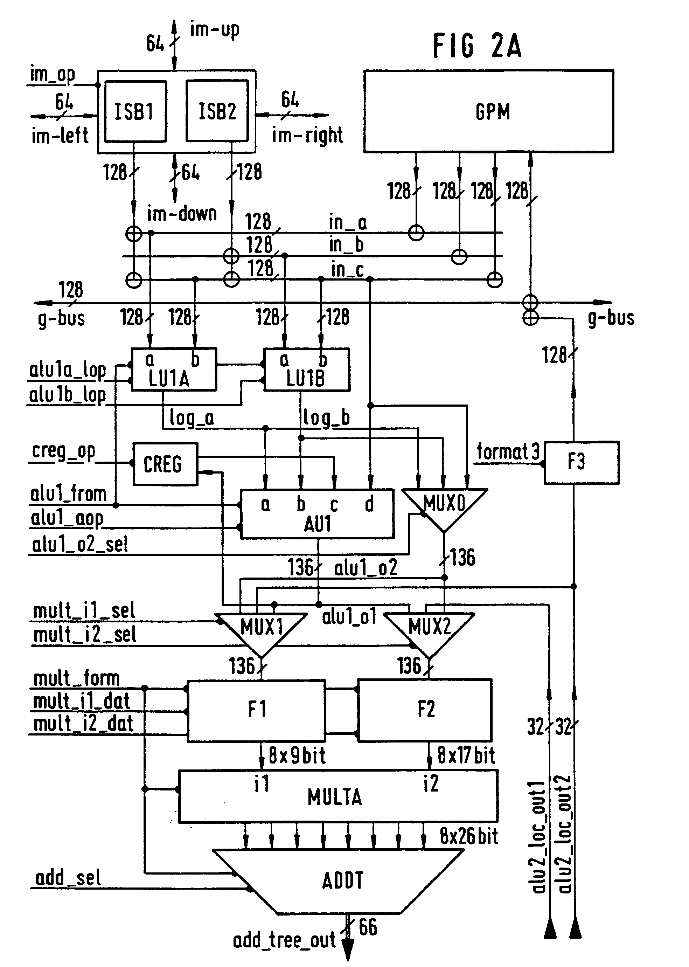

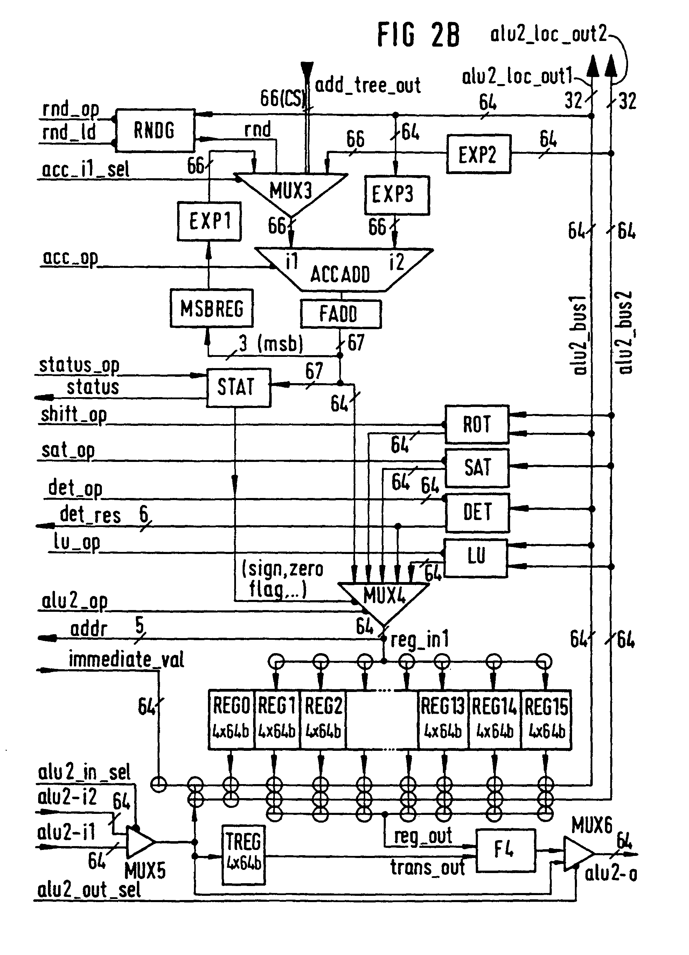

In den Figuren 2a und 2b ist ein detailliertes Beispiel eines Prozessorelementes eines erfindungsgemäßen Prozessors zur Bildverarbeitung gezeigt, wobei die Figur 2a im wesentlichen die Speicher ISB und GPM, die weitere arithmetisch-logische Einheit ALU1 und die Multiplizier/Addiereinheit MA und die Figur 2b im wesentlichen die arithemtisch logische Einheit ALU2 und die Registerbank REGF umfaßt. Darüber hinaus sind noch einige Register CREG, MSBREG und STAT, Formatierer F1 ... F4, Expandierer EXP1 ... EXP3 und Multiplexer MUX0 ... MUX6 vorhanden, die den arithmetisch-logischen Einheiten ALU1 und ALU2 hinzuzurechnen und der Datenauswahl bzw. der Wortbreitenanpassung dienen. Die Eingangsdaten für die arithmetisch-logische Einheit ALU1 stammen hier von zwei Bildausschnittspeichern ISB1 und ISB2 oder vom Speicher GPM. Zwei Bildausschnittsspeicher sind beispielsweise bei der Verarbeitung von Stereo-Bildern von besonderem Vorteil. Zusätzlich besteht hier die Möglichkeit, die Multiplizierer für eine 32 x 32 Bitmultiplikation direkt aus den Ergebnisregistern der arithmetisch logischen Einheit ALU2 zu versorgen, was über Signale alu2_loc_out1, erfolgt. Es können maximal drei Eingangsvektoren in_a, in_b, und in_c verarbeitet werden. Ein Crossbar-Switch sichert volle Flexibilität für die Auswahl dieser drei Eingangsvektoren. Die Bildausschnittspeicher ISB1 und ISB2 können nur von ihren Nachbarn bzw. von einem Bildcash über die Ports im-up, im-down, im-right und im-left nachgeladen werden. Das Vorladen eines Bildausschnittes in die Bildausschnittspeicher erfolgt ebenfalls über Nachladen und Schieben. Gesteuert wird das Einlesen über ein Signal im_op, welches die verschiedenen Schieberichtungen und die Schrittweite angibt. Der Speicher GPM bezieht seine Daten über den globalen Bus g-bus oder aus der Registerbank REGF mit den Registern Reg0 ... Reg15, die die Ergebnisregister für die arithmetisch-logische Einheit ALU2 bilden. Das Datenformat der Ausgangsdaten der Speicher ISB1, ISB2 und GPM ist identisch und bildet beispielsweise jeweils einen 128 Bit breiten Vektor, wobei der Vektor entweder vier 32 Bit Daten, acht 16 Bit Daten oder sechszehn 8 Bit Daten umfaßt.

Logische Einheiten LU1a und LU1b werden durch Signale alu1a_ lop bzw. alu1b_lop gesteuert und führen eine logische Verknüpfung der jeweiligen Eigänge a und b durch, die über den Crossbar-Switch mit den Speichern ISB1, ISB2 und GPM verbunden sind. Das Format der Eingänge wird über ein Signal alu1_form mitgeteilt. Für alle dyadischen Operationen muß das Format der beiden Eingänge identisch sein. Jede logische Einheit kann somit sechzehn 8 Bit oder acht 16 Bit oder vier 32 Bit Datenpaare parallel verarbeiten. Die logischen Einheiten LU1a und LU1b unterstützen beispielsweise folgende logischen Operationen:
a, (Bypass)
NEGa, (Negation)
a AND b,
a NAND b,
a OR b,
a NOR b,
a XOR b,
a XNOR b.

Eine arithmetische Einheit AU1 führt eine arithemtische Verknüpfung der Ausgangssignale der logischen Einheiten LU1a und LU1b durch. Darüber hinaus hat diese Einheit auch Hilfseingänge c und d, wobei der Eingang c mit einem Ausgang eines konstanten Registers CREG und des Hilfseingang d über den Crossbar Switch mit den Speichern verbunden ist. Eine in der Einheit AU1 durchzuführende Operation ist durch die Signale alu1_aop und das Format der Eingänge alu1_form festgelegt. Durch die mögliche Stellenerweiterung beträgt das Ausgangsformat in Abhängigkeit der Eingangsformate entweder 9, 17 oder 33 Bit und der Ausgangsvektor weist eine Bitbreite von 136 Bit auf. Alle an der Operation beteiligten Eingänge müssen gleiches Format besitzen. Es werden also sechzehn 8 Bit oder acht 16 Bit oder vier 32 Bit Datenpaare parallel verarbeitet. Die arithemtische Einheit AU1 unterstützt folgende Operationen:
a, (Bypass)
-a, (Zweierkomplement),
|a|, (Betragsbildung)
a + b,
|a + b|,
- a + b,
|- a + b|,
- (a - b) ,
- a - b,
   diverse Schwellwertfunktionen Vergleich von a mit b und Ausgabe von a, c, d oder 0 in Abhängigkeit des Ver gleichs.

Durch einen Multiplexer MUX0 wird abhängig von einem Steuersignal alu1_o2_sel entweder eines der Ausgangssignale log_a oder log_b der Einheiten LUla oder LUlb bzw. ein Speicherinhalt über den Crossbar-Switch für das Multipliziererfeld ausgewählt. Das Konstantenregister CREG kann beispielsweise vier Vektoren zu je 128 Bit speichern. Ein Vorladen mit dem Ausgangsdatum der arithmetischen Einheit AU1 geschieht in Abhängigkeit eines Signals creg_op. Der Registerinhalt wird in jedem Takt ausgegeben. Das Register dient zum Speichern von häufig wiederkehrenden Konstanten und dient der Entlastung des Speichers GPM. Der Multiplexer MUX1 und MUX2 dient zur Auswahl der Multiplizierereingangsdaten und zur Zuordnung der Multiplizierereingänge i1 und i2 in Abhängigkeit von den Signalen mult_i1_sel und mult_i2_sel. Bis zum Ausgang der Multiplexer liegen alle Daten in einem einheitlichen Format vor, egal ob sie für i1 oder i2 des Multipliziererblocks bestimmt sind. Die Eingänge i1 und i2 besitzen unterschiedliches Format und führen direkt zu den Eingängen der einzelnen Multiplizierer des Multipliziererfeldes. Über die Multiplexer MUX1 und MUX2 können auch die Register der Registerbank REGF für eine 32 x 32 Bit Multiplikation selektiert werden. Durch die Formatierer F1 und F2 werden in Abhängigkeit der gewählten Mulitpliziererkonfiguration, die durch das Signal mult_form festgelegt ist, die Eingangsdaten des Multipliziererfeldes aufbereiten. Für Konfigurationen, bei denen nicht alle Komponenten eines Datenvektors verarbeitet werden, muß ein Datensegment innerhalb eines 136 Bitwortes ausgewählt werden. Dies geschieht mittels eines Signals mult_i1_dat bzw. eines Signals mult_i2_dat. Diese Steuerinformation kann als Bestandteil der Adresse der Operanden angesehen werden. Beispielsweise bei einer 16 x 32 Bit Multiplikation benötigt der Eingang i1 des Multiplizierers zwei 16 Bit Daten und der Eingang i2 zwei 32 Bit Daten, die aus den angelieferten acht 16 Bit Daten für i1 und vier 16 Bit Daten für i2 selektiert werden müssen.

Das Multipliziererfeld MULTA besteht hier aus acht Multiplizierern, die jeweils eine Bitbreite von 16 Bit aufweisen. Je nach Format der Eingangsdaten werden die (Teil-) Ergebnisse der Multiplizierer in einem nachgeschalteten Addiererbaum ADDT stellenrichtig zu einem einzigen Gesamtergebnis aufaddiert. Dieses Gesamtergebnis stellt also die Summe von Produkten dar, deren Zahl wiederum vom Datenformat abhängt. Einziges Steuerwort für den Multiplizierer ist das Signal mult_form zur Festlegung der Datenformate. Damit wird intern gesteuert, welche Datenfragmente für die Multiplikation als vorzeichenlos oder Zweierkomplementzahl zu interpretieren sind. Der Addiererbaum benötigt das Signal mult_form, um die Verschiebung der Einzelprodukte vor dem Addieren festzulegen. Je nach eingestelltem Datenformat berechnet die Multiplizier/Addiereinheit MA die Summe aus
acht 8 x 8 Bit Produkten oder
acht 8 x 16 Bit Produkten oder
vier 16 x 16 Bit Produkten oder
vier 8 x 32 Bit Produkten oder
zwei 16 x 32 Bit Produkten oder
einem 32 x 32 Bit Produkt.

Mit Hilfe des Signals add_sel kann jedes der acht Teilprodukte wahlweise ausgeblendet werden. Dies ist notwendig um einzelne Produkte an Stelle einer Summe von Produkten anzugeben. Der Formatierer F3 ist beteiligt beim Transfer von Daten aus dem Ergebnisregister REGF in den Speicher GBM. Je nach Format werden die unteren 8, 16 oder 32 Bit der Ergebnisdaten vom Formatierer F3 aufgesammelt und in den Speicher GBM transferiert, sobald ein 128 Bit Wort vollständig ist. Da der Speicher GBM auch das Schreiben von einzelnen Daten erlaubt, kann auch ohne Zwischenpufferung im Formatierer F3 transferiert werden. Über das Signal format3 wird mitgeteilt, wieviele Bits, beispielsweise 8, 16 oder 32 Bit, aus der arithmetisch logischen Einheit 2 berücksichtigt werden sollen.

Datenquellen für die arithmetisch-logische Einheit ALU2 in Figur 2b bilden das Ausgangssignal add_tree_out des Addiererbaums ADDT, die Ausgänge der Ergebnisregisterbank und ein Zufallsgenerator RNDG. Die beider. Ausgänge der Ergebnisregisterbank sind über Busse alu2_bus1 und alu2_bus2 mit den arithmetisch-logischen Einheiten ALU1 und ALU2 sowie mit der Multiplizier/Addiereinheit MA verbunden und werden entweder aus Registern des jeweiligen Prozessorelements oder eines Nachbarprozessorelements über die Eingänge alu2_i1 oder alu2_i2 gespeist. Der Bus alu2_bus1 kann zusätzlich mit immediate-Werten von einem Controller versorgt werden. Die vier Ergebnisse eines Zyklusses werden immer in einem Vier-Segment-Register der Ergebnisregisterbank abgelegt, wobei ein Segment-Register jeweils beispielsweise 4 x 64 Bit aufweist. Dieses Ergebnisregister der Registerbank REGF enthält vier 64 Worte und repräsentiert vier Daten. Bei der Berechnung von 128 Bit Ergebnissen, die bei der Akkumulation von 32 x 32 Bit Produkten entstehen, enthält eines der Register Reg0 ...Reg15 vier 64 höherwertige Bits und ein jeweiliges Nachbarregister vier 64 niedrigerwertige Bits von vier Ergebnissen. Indizierte Daten für Minimum/Maximum belegen ein weiteres Register für vier Indexwerte. Die Registerbank besitzt einen Eingangsund drei Ausgangsports. Über einen Crossbar-Switch können die beiden Busse alu2_bus1 und alu2_bus2 mit Daten aus den eigenen Ergebnisregistern oder aus zwei verschiedenen Nachbarprozessorelementen versorgt werden. Die Daten der Nachbarprozessorelement:e stehen an den Ports alu2-i1 und alu2-i2 zur Verfügung, wobei die Auswahl über den Multiplexer MUX5 erfolgt. Der dritte Registerausgang führt zum Ausgang alu2-o des Prozessorelements, der gleichzeitig die Verbindung zum nächsten Nachbarprozessorelement bzw. zu einer Auswertungseinheit darstellt. Es ist ein Durchreichen von Ergebnissen an die Auswertungseinheit möglich, was beispielsweise für eine globale Miniumum/Maximum-Suche, zum Beispiel bei einem Blockmatching, erforderlich ist. Die Schreibeingänge der Registerbank sind über den Multiplexer MUX4 mit dem Ausgang der arithmetisch-logischen Einheit ALU2 verbunden. Die Ein- und Auslesereihenfolge der vier Segmente eines Registers ist nicht starr, sondern wird über Adressen gesteuert. Die Registerbank des hier beschriebenen Prozessorelements umfaßt sechzehn 4-Segment-Register und bedeutet bei einem Prozessor mit 4 x 4 Prozessoreinheiten eine Gesamtspeicherkapazität der Register von 8 kByte. Falls es die Chipfläche zuläßt kann diese Zahl in einer Stückelung von 0,5 kByte besser aber von 1 kByte beliebig erhöht werden.

Der Anwender kann in jedem Maschinenzyklus auf eine von fünf Funktionsgruppen zugreifen, welche durch parallele Datenpfade von einem Quell- zum Zielregister realisiert sind. Die Latenzzeit jeder dieser Schleifen beträgt genau einen Maschinenzyklus mit vier Takten. Die fünf Datenpfade sind:
1. Eine Addiererschleife mit einem Akkumulator-Addierer ACCADD, einem Endaddierer FADD, dem Multiplexer MUX3, den Expandierern EXP1 ... EXP3 und dem Zufallsgenerator RNDG. Die Funktionen der Addiererschleife liegen in der Akkumulation, in der Miniumum/Maximum-Suche, in der Addition von Zufallszahlen, in der Rundung und im Transfer der Ausgangsdaten des Addiererbaums in die Ergebnisregister der Registerbank.
2. Eine Shifter/Rotierer-Schleife mit einem Barrel-Rotator ROT zum arithmetischen und logischen Schieben/Rotieren und zur Unterstützung einer Miniumum/Maximum-Suche.
3. Eine Sättigungsschleife zum Sättigen von 64 Bit Werten auf 8, 16 oder 32 Bit und zur Unterstützung der Minimum/Maximum-Suche.
4. Eine Detektor-Schleife, die die Position des höchstwertigen bzw. niedrigstwertigen Bits ermittelt und eine Überlauferkennung bei Schiebeoperationen oder Sättigungsoperationen ermöglicht.
5. Eine Logik-Schleife, die logische Verknüpfungen von zwei Operanden ermöglicht.

Der Akkumulator-Addierer ACCADD addiert ein 66 Bit Datum am Eingang i1 zu einem 67 Bit Datum am Eingang i2 oder substrahiert ein Datum am Eingang i2 von einem Datum am Eingang i1. Das Ergebnis ist ein 64 Bit Datum. Ein Signal acc_op entscheidet zwischen einer Addition und einer Subtraktion. Beide Daten der Eingänge i1 und i2 liegen in einer 2erKomplementdarstellung vor. Der Endaddierer FADD bildet ein nicht redundantes 67 Bit Format aus den Ausgangsdaten des Akkumulator-Addierers ACCADD, wovon die 64 niederwertigen Bits an den Multiplexer MUX4 weitergegeben werden. Das Register MSBREG speichert die drei msbs des Endaddierers von je vier Daten eines Maschinenzyklusses zwischen. Bei der Addition von Daten mit doppeltem Wertebereich werden diese im darauffolgenden Zyklus zur Vervollständigung der Operation wieder in den Addierer ACCADD eingespeist. Der Expandierer EXP1 erzeugt ein 66 Bit Wort in 2er-Komplementdarstellung durch Expandierung der drei Bits aus dem Register MSBREG, wobei die drei Bits aus dem Register MSBREG die unteren drei Stellen und die übrigen 63 Stellen je nach Vorzeichen mit Einsen oder Nullen aufgefüllt werden. Die Expandierer EXP2 und EXP3 erzeugen aus einem 64 Bit Wort, das vorzeichenlos oder in 2er-Komplementdarstellung vorliegt, ein 66 Bit Wort in 2er Komplementdarstellung. Der Multiplexer MUX3 wählt das Eingangsdatum für i1 des Akkumulator-Addierers ACCADD in Abhängigkeit des Steuersignals acc_i1_sel aus, wobei der Bus alu_bus2 über den Expandierer EXP2, der Ausgang rnd des Zufallsgenerators RNDG, der Ausgang des Addiererbaums oder der Ausgang des Expandierers EXP1, also der Übertrag aus der vorhergehenden Addition, zur Auswahl zur Verfügung stehen. Der Zufallszahlengenerator RNDG erzeugt über ein rückgekoppeltes Schieberegister ausgehend von einem vorgeladenen Startwert Pseudozufallszahlen, die zu den Daten des Busses alu2_bus1 aufaddiert werden können. Der Startwert wird mittels des Signals rnd_ld aus dem Bus alu2_bus1 geladen. Durch ein Signal rnd_op werden entweder neue Zufallszahlen erzeugt und ausgegeben oder der Generatorinhalt wiederholt ausgegeben. Der Zufallszahlengenerator wird zur Erzeugung von statistischen Rundungseffekten, wie beispielsweise dithering, benötigt. Das Statusregister STAT enthält Flags für Vorzeichen, Überlauf und Null-Ergebnis aus dem Endaddierer. Die Statusbits werden vor jedem Ergebnis berechnet, das Signal status_op entscheidet darüber, ob sie tatsächlich ins Statusregister übernommen werden oder nicht. Der Controller kann die Statusbits lesen und auswerten. Die Statusbits können jedoch auch ohne Umweg über den Controller dem Multiplexer MUX4 direkt als Steuereingang zur Verfügung gestellt werden, was bei der Minimum/Maximum-Suche und anderen bedingten Zuweisungen von Vorteil ist. Mit dem Barrel Rotator ROT ist ein arithmetisches und logisches Links- und Rechtsschieben der Daten des Busses alu2_bus1 um 0 bis 63 Stellen möglich und wird mit Hilfe eines Signals shift_op gesteuert. Der Schiebefaktor ist entweder eine Konstante, die direkt aus dem Signal shift_op hervorgeht oder eine Variable, die aus einem Ergebnisregister über dem Bus alu2_bus2 angelegt wird. Bei konstantem Schiebefaktor können die nachrükkenden Stellen aus dem Bus alu2_bus2 übernommen werden. Bei gleichen Daten auf den Bussen alu2_bus1 und alu2_bus2 ergibt sich auf diese Weise eine Rotation. Die Shifter/RotiererSchleife ist auch bei der Minimum/Maximum-Suche oder bedingten Zuweisungen beteiligt. Hierzu muß der Schiebefaktor 0 eingestellt werden. Durch die Sättigung SAT werden die Daten des Busses alu2_bus2 in einen durch das Signal sat_op spezifizierten Wertebereich eingepaßt, wobei die Wertebereiche 8, 16 und 32 Bit unterstützt werden. Daten, die aus einem eingestellten Bereich herausfallen, werden durch die größte darstellbare, positive oder die kleinste darstellbare negative Zahl ersetzt - Sättigung. Die Entscheidung, ob gesättigt wird oder nicht, trifft der Controller anhand des Signals det_res des Detektors DET und teilt sie für jedes Datum über das Signal sat_op der Sättigungsschaltung SAT mit. Die Logikeinheit LU führt eine logische Verknüpfung der Daten des Busses alu2_busl und der Daten des Busses alu2_bus2 durch. Gesteuert durch ein Signal lu_op sind die Operationen AND, NAND, OR, NOR, XOR, XNOR und NEG möglich. Der Multiplexer MUX4 entscheidet abhängig von dem Signal alu2_op welcher der oben erwähnten fünf Datenpfade ein Ergebnis in die Register schreibt. Der zweite Steuereingang, wird vom Steuerregister STAT gespeist und hilft bei bedingten Zuweisungen zum Beispiel bei der Minimum/Maximum-Suche, wobei der Akkumulatoraddierer ACCADD die Differenz zwischen den beiden Bussen alu2_bus1 und alu2_bus2 bildet und anhand des Vorzeichens der Differenz auswählt, ob die Daten des Busses alu2_bus1 über den Barrel Rotator ROT oder die Daten des Busses alu2_bus2 über den Sättigungsblock SAT mit abgeschalteter Sättigung in die Registerbank geschrieben werden. Der Multiplexer MUX5 wählt abhängig von einem Signal alu2_in_sel einen der Eingängen alu2_i1 oder alu2_i2 des Prozessorelements und somit das Nachbarprozessorelement aus, dessen Daten als Operanden verwendet werden. Ein Transferregister TREG kann vier 64 Bit Worte zwischenspeichern und je nach Bedarf über einen Formatierer F4 an den Ausgang alu2-o des Prozessorelements ausgeben. Das Transferregister TREG dient ferner als Puffer beim Auslesen der Ergebnisdaten und deren Transfer zum rechten Nachbarprozessorelement einer Prozessorelementzeile. So wird die Ergebnisregisterbank nicht belastet und steht bereits für die folgende Operation zur Verfügung. Beim Formatierer F4 werden abhängig von einem Signal format4_form die unteren 1, 2, 4 oder 8 Bytes eines Registerausgangs reg_out der Registerbank an eine durch das Signal format4_pos festgelegte Byte-Position des Formatiererausgangs gelegt. Die übrigen Bytes am Ausgang werden 1:1 aus dem Transferregister übernommen. Mit Hilfe dieses Formatierers ist es möglich, während des Transfers von Ergebnisdaten entlang einer Prozessorelementzeile mehrere Ergebnisse von 1, 2 oder 4 Bytes zu einem 8 Byte Wort zusammenzufassen und somit die 64 Bit Verbindung zwischen Prozessorelementen besser zu nutzen. Der Multiplexer MUX6 selektiert in Abhängigkeit des Steuersignals alu2_out_sel das Ausgabedatum für den Ausgang alu2-o des Prozessorelements. Zur Auswahl stehen Ausgangsdaten des Formatierers F4 oder Eingangsdaten des Prozessorelements. Der Multiplexer MUX6 ermöglicht es, daß wahlweise einer der beiden Eingänge des Prozessorelements direkt mit dem Ausgang alu2-o des Prozessorelements ohne Zwischenspeicherung im Transferregister verbindbar ist.

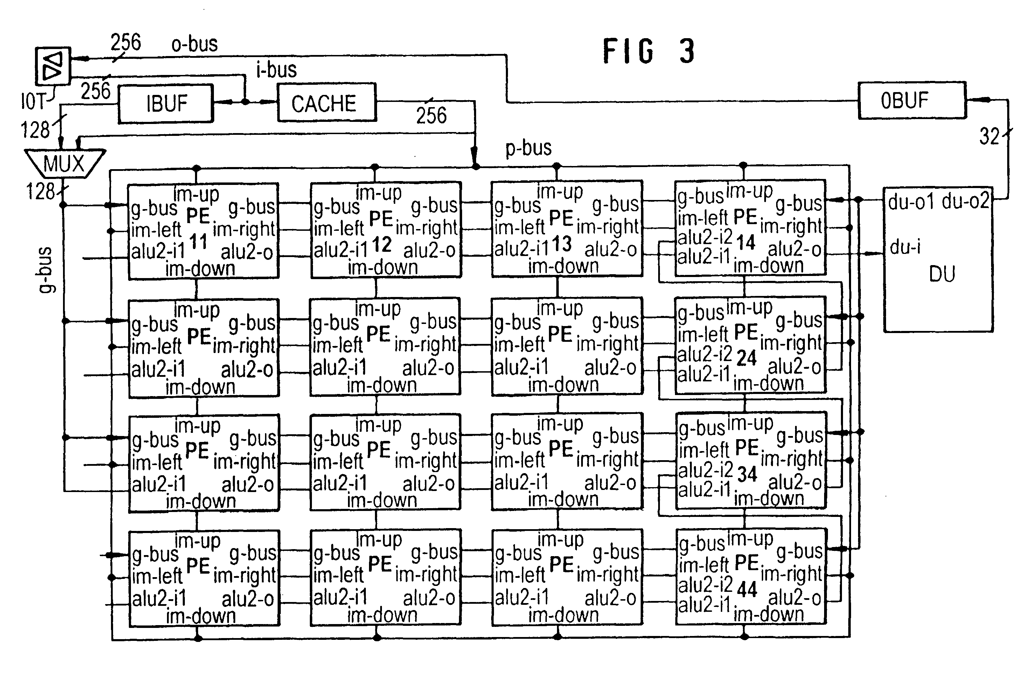

In Figur 3 ist ein erfindungsgemäßer Prozessor mit sechzehn Prozessorelementen PE₁₁ .. PE₄₄ gezeigt, die zu einem zweidimensionalen Feld der Kantenlänge 4 verschaltet sind und von einem gemeinsamen Controller gesteuert werden. Um das Feld herum liegt ringförmig ein 256 Bit breiter Pixelbus p-bus, um die Speicher ISB der einzelnen Prozessorelemente an den vier Kanten des Feldes mit Nachladepixeln zu versorgen. Weitere Eingangsdaten erhält das Feld über den globalen Bus g-bus, der entweder von einem Bild-Cache CACHE oder von einem Eingangspuffer IBUF oder von einer Auswerteeinheit DU (Data Unit) gespeist wird. Mit Hilfe der Auswerteeinheit DU werden beispielsweise Divisionen, Histogramme für Grauwertbestimmungen oder Auswertungen mit Hilfe von Wertetabellen durchgeführt. Während der Cache-Speicher CACHE vielfältige Ausgabemodi besitzt, dient der Eingabebuffer IBOF nur als FIFO zwischen einem externen Speicher und den Speichern GMP der Prozessorelemente.

Die Auswerteeinheit DU hat die Aufgabe, die Ergebnisdaten aus den Ergebnisregistern der Prozessorelemente zu übernehmen, eventuell noch eine Nachbearbeitung durchzuführen und schließlich die Daten über einen Ausgangsbuffer in den externen Speicher zu übertragen oder sie über den globalen Bus g-bus dem Prozessorfeld wieder verfügbar zu machen. Die Nachbearbeitung umfaßt Operationen wie Division, Histogramm und Table Look-Up, deren Implementierung innerhalb der Prozessorelemente zu flächen- oder speicherintensiv wäre. Der Transport der Ergebnisdaten der einzelnen Prozessorelemente zur Auswertungseinheit geschieht über Eingänge alu2-i und Ausgänge alu2-o von Prozessorelementen. Vier Prozessorelemente einer Zeile, z.B die Elemente PE₁₁ ..PE₁₄, bilden über ihre Eingänge alu2-i1 und alu2-o jeweils eine Kette. Über die Multiplexer MUX5 lassen sich die Prozessorelemente PE₁₄ ..PE₄₄ der letzten Spalte ebenfalls zu einer Kette verschalten, so daß alle Ergebnisdaten über horizontales und vertikales Weiterreichen schließlich zum oberen rechten Prozessorelement PE₁₄ und von dort zur Auswertungseinheit DU gelangen können. Die gleichen Verbindungen werden auch bei globalen Operationen wie der Extremwertsuche genutzt wobei die vier Prozessorelemente der rechten Spalte jeweils den Extremwert ihrer Zeile ermitteln, bevor dann das obere rechte Prozessorelement den globalen Extremwert ermittelt.

Alle sechzehn Prozessorelemente arbeiten taktgleich ohne Verzögerung zueinander, das heißt, daß immer zum gleichen Zeitpunkt eine Operation für alle Frozessorelemente angestoßen wird. Zum Ausgeben oder zum Vorladen der Ergebnisregister über die Eingänge alu2-i und Ausgänge alu2-o geben daher alle Prozessorelemente gleichzeitig ihren Registerinhalt auf den Ausgang und übernehmen parallel dazu die Daten, die ihnen über die Eingänge angeliefert werden. Bei globalen Operationen wird ähnlich verfahren, wobei das letzte Prozessorelement in einer Kette, welches die eigentliche Operation durchführt, die Daten seines Eingangs mit den lokal gespeichertem Ergebnis verknüpft und die entstehenden Resultate wiederum lokal abspeichert. Die übrigen Prozessorelemente verhalten sich wie bei der Ausgabe von Ergebniswerten.

Prozessoreingangsdaten werden über einen Ein/Ausgangs-Treiber IOT einem Eingangsbus I-Bus zugeführt, der den Eingangsbuffer IBUF und den Cache-Speicher CACHE versorgt. Über einen Multiplexer MUX kann der globale Bus g-bus entweder mit dem Ausgang des Eingangsbuffers oder mit dem Ausgang des Cache-Speichers verbunden werden. Der Ausgang der Auswerteeinheit DU ist über einen Ausgangsbuffer OBUF mit einem Ausgangsbus o-bus verbunden, der seinerseits über den Ein/Ausgangs-Treiber IOT mit dem Prozessorausgang verbunden ist.

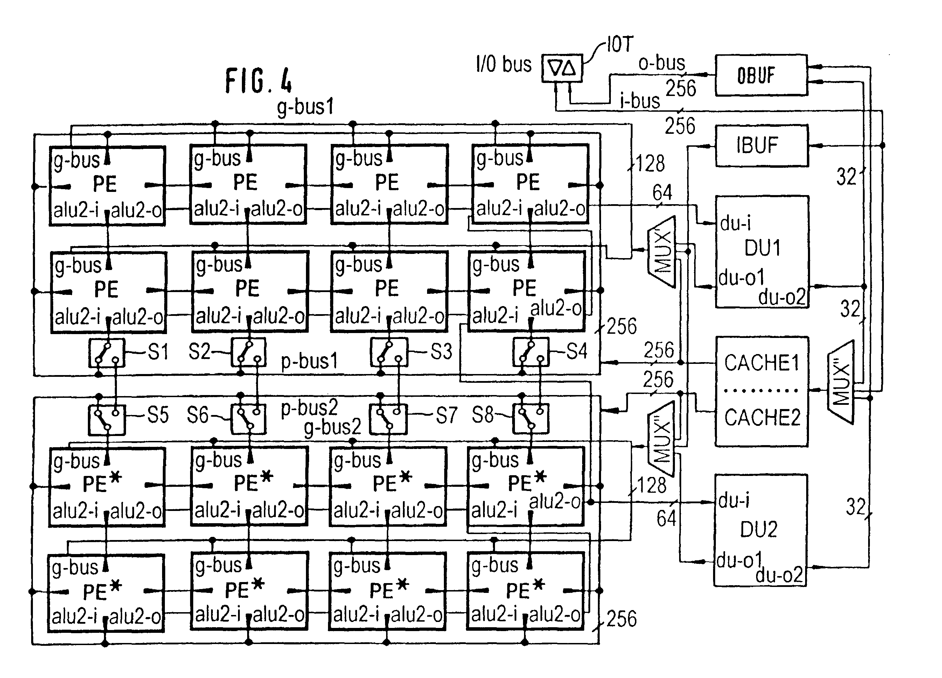

In Figur 4 ist ebenfalls ein erfindungsgemäßer Prozessor mit sechzehn Prozessorelementen dargestellt, der nicht nur wie in Figur 3 dargestellt, als sogenanntes SIMD-Feld (Single Instruction Multiple Data-Feld), bei dem also alle Prozessorelemente die gleichen Befehle erhalten, sondern mit Hilfe von Schaltern S1 ... S8 auch als sogenanntes MIMD-Feld (Multiple Instruction Multiple Data-Feld) konfiguriert werden kann. In Figur 4 ist ein MIMD-Feld mit zwei SIMD-Feldern zu je acht Prozessorelementen PE und PE^{*} dargestellt. Jedes dieser SIMD-Felder benötigt einen eigenen Controller, eine eigene Auswerteeinheit DU1 und DU2, einen eigenen Bildcache CACHE1 und CACHE2 und zusätzliche Multiplexer MUX' ... MUX'''. Jedes der beiden SIMD-Felder besitzt für sich einen ringförmigen Pixelbus p-busl und p-bus2 der von einem separaten Cache CACHE1, CACHE2 versorgt wird. Die Caches erhalten ihre Daten entweder von außerhalb über einen Eingangsbus i-bus oder von den Auswerteeinheiten DU1 bzw. DU2. Durch das Einspeisen der Ergebnisse der Auswerteeinheit DU1 in den Cache-Speicher CACHE2 ist es beispielsweise möglich, eine Verarbeitungskette zu bilden, wobei die Ausgangsdaten des SIMD-Feldes mit den Prozessorelementen PE als Eingangsdaten für das SIMD-Feld mit den Prozessorelementen PE^{*} dienen. Wenn es die Bandbreite erlaubt, können beide SIMD-Felder unterschiedliche Operationen auch mit externen Eingangsdaten durchführen und die Ergebnisse wieder an den externen Speicher ausgeben. Das hier beschriebene MIMD fähige Prozessorfeld ist über die Schalter S1 ... S8 rekonfigurierbar und kann zum einen als zwei unabhängige Blöcke mit acht Prozessorelementen oder aber als ein einzelnes SIMD-Feld mit sechzehn Prozessoreinheiten konfiguriert werden, wobei über die Schalter die beiden Pixelbusse p-busl und p-bus2 zu einem einzigen Ringbus umkonfiguriert werden. Ebenso lassen sich die beiden Caches CACHE1 und CACHE2 zu einem globalen Cache zusammenschalten. Die beiden Auswerteeinheiten können sich für den Fall des gemeinsamen SIMD-Feldes die Aufgabe teilen.

## Patentansprüche

1. Prozessor zur Bildverarbeitung mit einer Mehrzahl von gleichartigen aufgebauten in der Art einer Matrix verbundenen Prozessorelementen (PE₁₁ ..PE₄₄),
- bei dem ein jeweiliges Prozessorelement neben einer über eine Registerbank (REGF) rückgekoppelten jeweiligen arithmetisch-logischen Einheit (ALU2) einen jeweiligen Teilspeicher (ISB) eines verteilten Bildausschnittspeichers, einen jeweiligen lokalen Mehrzweckspeicher (GPM), eine jeweilige weitere arithmetische-logische Einheit (ALU1) und eine jeweilige Multiplizier/Addier-Einheit (MA) aufweist,
- wobei der Eingang der jeweiligen Multiplizier/AddierEinheit mit einem Ausgang der jeweiligen weiteren arithmetisch-logischen Einheit verbunden ist, welche selbst Eingänge aufweist, die mit einem Ausgang des jeweiligen Teilspeichers und mit einem Ausgang des jeweiligen lokalen Mehrzweckspeichers verbunden sind und der Ausgang der Multiplizier/Addier-Einheit mit einem Eingang der arithmetisch-logischen Einheit (ALU2) verbunden ist,
- wobei Ausgänge der Registerbank (REGF) mit Eingängen des lokalen Mehrzweckspeichers und/oder mit Eingängen der jeweiligen weiteren arithmetisch-logischen Einheit (ALU1) und/oder mit Eingängen der jeweiligen Multiplizier/Addier-Einheit (MA) verbunden sind und Ausgangsdaten (ALU2-o) liefern,
- wobei Eingangsdaten (ALU2-i)' sowohl der jeweiligen arithmetisch-logischen Einheit (ALU2) als auch der weiteren arithmetisch-logischen Einheit (ALU1) und/oder der Multiplizier/Addier-Einheit (MA) eingangsseitig zugeführt sind,
- wobei der jeweilige Teilspeicher des verteilten Bildausschnittspeichers Bilddaten (im-down, im-left, im-up, im-right) durch Teilspeicher (ISB) benachbarter Prozessorelemente und, sofern kein entsprechend benachbartes Prozessorelement vorliegt, durch einen Pixelbus (p-bus) mit Bilddaten versorgt ist und
- wobei der jeweilige lokale Mehrzweckspeicher (GPM) über einen globalen Bus (g-bus) mit Berechnungsdaten versorgt ist.

2. Prozessor nach Anspruch 1,
bei dem die Eingangswortbreite des jeweiligen Teilspeichers (ISB), des jeweiligen lokalen Mehrzweckspeichers (GPM), der jeweiligen weiteren arithmetisch-logischen Einheit (ALU1) und der jeweiligen Multiplizier/Addier-Einheit (MA) flexibel wählbar ist und je nach gewählter Eingangswortbreite mehrkomponentige Vektoren von Eingangsdaten in der weiteren arithmetisch-logischen Einheit (ALU1) und der jeweiligen Multiplizier/Addier-Einheit (MA) parallel verarbeitbar sind.

3. Prozessor nach Anspruch 1 oder 2,
bei dem die jeweilige Multiplizier/Addier-Einheit aus einer Mehrzahl parallel arbeitender Multiplizierer (MULTA) besteht, die ausgangsseitig durch einen Addiererbaum (ADDT) zusammengefaßt sind.

4. Prozessor nach einem der Ansprüche 1 bis 3,
bei dem ein Eingangsdatenbus (i-bus) über einen Cache-Speicher (CACHE) mit dem Pixelbus (p-bus) verbunden ist.

5. Prozessor nach einem der Ansprüche 1 bis 4,
bei dem mit Hilfe eines Multiplexers (MUX5) in den Prozessorelementen (PE₁₄ ..PE₄₄) der letzten Spalte der Matrix wahlweise mit dem Ausgang eines Nachbarprozessorelementes (z.B. PE₁₃) der gleichen Zeile oder eines Nachbarprozessorelementes (PE₂₄) der gleichen Spalte verbindbar ist und bei dem der Ausgang eines letzten Prozessorelementes (PE₁₄), das in Datenflußrichtung weder in horizontaler noch in vertikaler ein Folgeprozessorelement aufweist, mit einer Auswerteeinheit (DU) verbunden ist.

6. Prozessor nach einem der vorhergehenden Ansprüche,
bei dem durch elektronische Schalter (S1 ... S8) mit Hilfe von Multiplexern (MUX'..MUX''') mindestens zwei Gruppen von Prozessorelementen (PE, PE^{*}) mit mindestens zwei getrennten globalen Bussen (g-bus1, g-bus2), mindestens zwei getrennten Pixelbussen (p-bus1, p-bus2), mindestens zwei getrennten Cache-Speichern (CACHE1, CACHE2) und mindestens zwei getrennten Auswertungseinheiten (DU1, DU2) bildbar sind.

## Claims

1. Image-processing processor having a plurality of built-up processor elements (PE₁₁ ..PE₄₄) of the same type which are connected after the manner of a matrix,
- in which a respective processor element has, in addition to a respective arithmetic logic unit (ALU2) having feedback via a register bank- (REGF), a respective storage unit (ISB) of a distributed image section buffer, a respective local general purpose memory (GPM), a respective further arithmetic logic unit (ALU1) and a respective multiplier/adder unit (MA),
- where the input of the respective multiplier/adder unit is connected to an output of the respective further arithmetic logic unit which itself has inputs which are connected to an output of the respective storage unit and to an output of the respective local general purpose memory, and the output of the multiplier/adder unit is connected to an input of the arithmetic logic unit (ALU2),
- where outputs of the register bank (REGF) are connected to inputs of the local general purpose memory and/or to inputs of the respective further arithmetic logic unit (ALU1) and/or to inputs of the respective multiplier/adder unit (MA) and supply output data (ALU2-o),
- where input data (ALU2-i) are fed to the input side both of the respective arithmetic logic unit (ALU2) and of the further arithmetic logic unit (ALU1) and/or of the multiplier/adder unit (MA),
- where the respective storage unit of the distributed image section buffer is supplied with image data (im-down, im-left, im-up, im-right) by storage units (ISB) of neighbouring processor elements and, if a correspondingly neighbouring processor element is not present, is supplied with image data by a pixel bus (p-bus), and
- where the respective local general purpose memory (GPM) is supplied with calculation data via a global bus (g-bus).

2. Processor according to Claim 1,
in which the input word length of the respective storage unit (ISB), of the respective local general purpose memory (GPM), of the respective further arithmetic logic unit (ALU1) and of the respective multiplier/adder unit(MA) can be chosen in a flexible manner and, depending on the input word length chosen, multicomponent vectors of input data can be processed in parallel in the further arithmetic logic unit (ALU1) and the respective multiplier/adder unit (MA).

3. Processor according to Claim 1 or 2,
in which the respective multiplier/adder unit comprises a plurality of multipliers (MULTA) which operate in parallel and are combined on the output side by an adder tree (ADDT).

4. Processor according to one of Claims 1 to 3,
in which an input data bus (i-bus) is connected to the pixel bus (p-bus) via a cache memory (CACHE).

5. Processor according to one of Claims 1 to 4,
in which with the aid of a multiplexer (MUX5), a respective one of the processor elements (PE₁₄ ..PE₄₄) of the last column of the matrix can optionally be connected to the output of a neighbouring processor element (e.g. PE₁₃) of the same row or of a neighbouring processor element (PE₂₄) of the same column, and in which the output of a last processor element (PE₁₄) which has a following processor element neither in the horizontal nor in the vertical direction of data flow is connected to an evaluation unit (DU).

6. Processor according to one of the preceding claims,
in which by means of electronic switches (S1 ... S8), with the aid of multiplexers (MUX' ..MUX'''), it is possible to form at least two groups of processor elements (PE, PE^{*}) with at least two separate global buses (g-bus1, g-bus2), at least two separate pixel buses (p-bus1, p-bus2), at least two separate cache memories (CACHE1, CACHE2) and at least two separate evaluation units (DU1, DU2).

## Revendications

1. Processeur destiné au traitement d'images et comportant plusieurs éléments processeurs (PE₁₁ à PE₄₄) ayant la même structure et reliés comme une matrice,
- dans lequel un élément processeur respectif comporte, outre une unité arithmétique-logique (ALU2) respective branchée en rétroaction par l'intermédiaire d'un banc de registres (REGF), une mémoire partielle respective (ISB) d'une mémoire d'extrait d'image répartie, une mémoire polyvalente locale respective (GPM), une autre unité arithmétique-logique respective (ALU1) et une unité de multiplication/addition respective (MA),
- dans lequel l'entrée de l'unité de multiplication/addition respective est reliée à une sortie de l'autre unité arithmétique-logique respective qui comporte elle-même des entrées qui sont reliées à une sortie de la mémoire partielle respective et à une sortie de la mémoire polyvalente locale respective et la sortie de l'unité de multiplication/addition est reliée à une entrée de l'unité arithmétique-logique (ALU2),
- dans lequel des sorties du banc de registres (REGF) sont reliées à des entrées de la mémoire polyvalente locale et/ou à des entrées de l'autre unité arithmétique-logique respective (ALU1) et/ou à des entrées de l'unité de multiplication/addition (MA) et fournissent des données de sortie (ALU2-o),
- dans lequel des données d'entrée (ALU2-i) sont envoyées côté entrée aussi bien à l'unité arithmétique-logique respective (ALU2) qu'à l'autre unité arithmétique-logique (ALU1) et/ou à l'unité de multiplication/addition (MA),
- dans lequel la mémoire partielle respective de la mémoire d'extrait d'image reçoit des données d'image (im-down, im-left, im-up, im-right) par des mémoires partielles (ISB) d'éléments processeurs voisins et, dans la mesure où il n'y a pas d'élément processeur voisin correspondant, par un bus de pixel (p-bus), et
- dans lequel la mémoire polyvalente locale respective (GPM). est alimentée en données de calcul par l'intermédiaire d'un bus global (g-bus).

2. Processeur selon la revendication 1, dans lequel la largeur de mot d'entrée de la mémoire partielle respective (ISB), de la mémoire polyvalente locale respective (GPM), de l'autre unité arithmétique-logique respective (ALU1) et de l'unité de multiplication/addition respective (MA) peut être choisie avec flexibilité et, selon la largeur de mot d'entrée choisie, des vecteurs à plusieurs composantes de données d'entrée peuvent être traités en parallèle dans l'autre unité arithmétique-logique (ALU1) et dans l'unité de multiplication/addition respective (MA).

3. Processeur selon la revendication 1 ou 2, dans lequel l'unité de multiplication/addition respective est constituée de plusieurs multiplicateurs (MULTA) qui travaillent en parallèle et qui sont regroupés côté sortie par un arbre additionneur (ADDT).

4. Processeur selon l'une des revendications 1 à 3, dans lequel un bus de données d'entrée (i-bus) est relié par l'intermédiaire d'une mémoire cache (CACHE) au bus de pixel (p-bus).

5. Processeur selon l'une des revendications 1 à 4, dans lequel, à l'aide d'un multiplexeur (MUX5) dans les éléments processeurs (PE₁₄ à PE₄₄) de la dernière colonne de la matrice peut être relié sélectivement à la sortie d'un élément processeur voisin (par exemple PE₁₃) de la même ligne ou à la sortie d'un élément processeur voisin (par exemple PE₂₄) de la même colonne et dans lequel la sortie d'un dernier élément processeur (PE₁₄) qui ne comporte un élément processeur suivant ni à l'horizontale ni à la verticale dans la direction du flux de données est reliée à une unité d'évaluation (DU).

6. Processeur selon l'une des revendications précédentes, dans lequel, au moyen de commutateurs électroniques (S1 à S8) et à l'aide de multiplexeurs (MUX' à MUX'''), on peut former au moins deux groupes d'éléments processeurs (PE, PE^{*}) comportant au moins deux bus globaux séparés (g-bus1, g-bus2), au moins deux bus de pixels séparés (p-bus1, p-bus2), au moins deux mémoires caches séparées (CACHE1, CACHE2) et au moins deux unités d'évaluation séparées (DU1, DU2).
